# EUROPEAN PATENT APPLICATION

(11) **EP 2 234 084 A1**
(43) Date of publication of application: **29.09.2010**
(21) Application number: 08867703.4
(22) Date of filing: 25.12.2008
(51) Int. Cl.: G08G 1/09, G01C 21/00

(54) **MOUNTING-ON-VEHICLE EQUIPMENT, OUTPUT PROPRIETY JUDGMENT METHOD, ROAD COMMUNICATION SYSTEM AND PROGRAM**

(30) Priority: 28.12.2007 JP 2007340640
(71) Applicant: Kabushiki Kaisha Kenwood, Hachiouji-shi Tokyo 192-8525 (JP)
(72) Inventor: UENO, Masahiro, Tokyo 168-0062 (JP); KINOSHITA, Yoshihito, Sagamihara-shi Kanagawa 229-1102 (JP)
(74) Representative: Leinweber & Zimmermann
(86) International application number: PCT/JP2008/073514
(87) International publication number: WO 2009/084558

(57) **Abstract**

An utterance type vehicle-mounted device (200) (vehicle-mounted device) is mounted on a vehicle traveling on a road and provided with a communication processing unit for receiving information from roadside apparatus (100) at a roadside and an information output unit for outputting the information received by the communication processing unit. The utterance type vehicle-mounted device (200) further includes a control unit which judges whether the received information is to be provided to the same direction or a different direction as the vehicle traveling direction in accordance with the judgment of whether or not directional information detected by a direction identification means (257) provided at the road is consistent with directional information contained in the received information and which determines whether or not to output the received information. Thus, a vehicle-mounted device, an output propriety method, a road communication system, and a program are provided that are not made to output traffic information or its like which is not directed to the own vehicle.

## Description

### TECHNICAL FIELD

The present invention relates to a vehicle-mounted device, an output acceptability decision method, a road communication system, and a program.

### BACKGROUND ART

Intelligent transport systems (hereafter referred to as "ITS") have been conceived and have started to be realized; the ITS is a new transport system configured to use a short range communication system called DSRC (Dedicated Short Range Communication; hereafter referred to as "DSRC") to solve road traffic problems such as traffic accidents and traffic jams. In the ITS, roadside apparatuses installed on a road broadcast information to vehicle-mounted devices mounted in vehicles. Each vehicle-mounted device provides traffic information received from the roadside apparatus to an occupant in the vehicle in the form of voice, still images, or text data at predetermined timings. Attempts have been made to configure roadside apparatuses used in the ITS such that the apparatuses provide vehicle-mounted devices with information varying between the inbound lane and outbound lane of the road. If such information varying between the inbound lane and the outbound lane is provided, traffic information for the inbound lane transmitted by the roadside apparatus may be received by a vehicle-mounted device mounted in a vehicle traveling in the outbound lane, because of leakage, irregular reflection, or the like of electric waves to output the traffic information. In a known technique to solve such a problem, an electric wave absorber is provided at a tollgate on a toll road; the electric wave absorber enables inhibition of the leakage, irregular reflection, or the like of electric waves transmitted by the roadside apparatus (see Patent Document 1).
Patent Document 1: Japanese Patent Application Laid-Open No. 2002-237719 (FIG. 1 and the like)

### DISCLOSURE OF THE INVENTION

### PROBLEMS TO BE SOLVED BY THE INVENTION

The technique described in Patent Document 1 is used for a roadside apparatus in an ETC system provided at an expressway tollgate. According to the technique, the electric wave absorber may be provided in the tollgate. Thus, costs and an installation site do not need to be particularly taken into account. However, for the roadside apparatus used in the ITS, not all the roadside apparatuses have corresponding tollgates. Appropriate installation sites cannot be provided for all the electric wave absorbers. Furthermore, enormous amounts of time and money are required to ensure appropriate installation costs and site for the electric wave absorber, for all the roadside apparatuses. This is not practical. Thus, a new technique for the ITS needs to be provided which prevents output of traffic information or the like not directed to the own vehicle and resulting from the leakage, irregular reflection, or the like of electric waves transmitted by the roadside apparatus.

The present invention has been developed in view of the above-described problems. An object of the present invention is to provide a vehicle-mounted device, an output acceptability decision method, a road communication system, and a program all of which are designed to prevent output of traffic information and the like not directed to the own vehicle.

The present invention has been developed in view of the above-described problems. An object of the present invention is to provide a vehicle-mounted device, an output acceptability decision method, a road communication system, and a program all of which are designed to prevent output of traffic information and the like not directed to the own vehicle.

### MEANS FOR SOLVING THE PROBLEMS

To accomplish the above-described object, the present invention provides a vehicle-mounted device basically mounted in a vehicle traveling on a road, the vehicle-mounted device including a communication processing unit configured to receive information from a roadside apparatus installed on the road, and an information output unit configured to output the information received by the communication processing unit, the vehicle-mounted device further including a control unit configured to decide whether the received information is to be provided for the same direction as the vehicle traveling direction or for a direction different from the vehicle traveling direction depending on whether direction information detected by direction identification means provided on the road coincides with direction information included in the received information, to decide whether or not to output the received information.

Furthermore, the vehicle-mounted device according to the present invention has the above-described configuration, and the control unit includes a direction information detection unit configured to be capable of detecting the direction information from the direction identification means provided on the road, a direction information storage unit configured such that the direction information is recorded therein, and an output probability decision unit configured to decide whether the received information is to be provided for the same direction as the vehicle traveling direction or for a direction different from the vehicle traveling direction depending on whether or not the direction information included in the received information coincides with the direction information recorded in the direction information storage unit, to decide whether or not to output the received information.

Moreover, preferably, the vehicle-mounted device according to the present invention has the above-described configuration, and the direction identification means includes data on direction information allowing the vehicle traveling direction to be determined and/or information allowing the road to be determined, and the vehicle-mounted device reads the direction information and/or the information allowing the road to be determined, from the direction identification means to detect the traveling direction on the road.

Moreover, preferably, the vehicle-mounted device according to the present invention has the above-described configuration, and detects the traveling direction on the road based on the existence or absence, shape, or color of the direction identification means, or intervals or positions at which the direction identification means are provided on the road.

Moreover, preferably, the direction identification means includes information allowing the type of the road to be determined, and the vehicle-mounted device reads the information allowing the type of the road to be determined, from the direction identification means to detect the type of the road.

Moreover, preferably, after detection of the direction identification means, when a failure to detect new direction identification means lasts for a predetermined time, the received information is outputted regardless of whether or not the received information includes direction information.

Moreover, preferably, after detection of the direction identification means, when a failure to detect new direction identification means lasts for a predetermined time, the direction information detection unit operates to delete the direction information recorded by the direction information storage unit.

Moreover, preferably, the vehicle-mounted device according to the present invention is prevented from acquiring position information on the vehicle from a GPS apparatus or a vehicle speed sensor.

In another aspect, the present invention can be understood as an invention for a method for deciding whether or not output is acceptable. The method is used for a vehicle-mounted device including a communication processing unit configured to receive information from a roadside apparatus installed on a road, and an information output unit configured to output the information received by the communication processing unit, and includes a step of detecting direction information from direction identification means provided on the road, a step of deciding whether the received information is to be provided for the same direction as a vehicle traveling direction or for a direction different from the vehicle traveling direction depending on coincidence with the direction information included in the received information, and a step of deciding whether or not to output the received information based on a result of the decision.

In further another aspect, the present invention can be understood as a road communication system. The road communication system according to the present invention includes a vehicle-mounted device mounted in a vehicle, a roadside apparatus configured to transmit information including direction information to the vehicle-mounted device, an information provision server configured to transmit the information including the direction information to the roadside apparatus, and direction identification means provided on a road, the vehicle-mounted device including a communication processing unit configured to receive information from the roadside apparatus, an information output unit configured to output the information received by the communication processing unit, a direction information detection unit configured to be capable of detecting the direction information from the direction identification means, a direction information storage unit configured such that the direction information is recorded therein, and an output probability decision unit configured to decide whether the received information is to be provided for the same direction as a vehicle traveling direction or for a direction different from the vehicle traveling direction depending on whether or not the direction information included in the received information coincides with the direction information recorded in the direction information storage unit, to decide whether or not to output the received information.

In further another aspect, the present invention can be understood as a program for allowing a computer to function as one of the above-described vehicle-mounted devices.

### EFFECTS OF THE INVENTION

The present invention can provide a vehicle-mounted device, an output acceptability decision method, a road communication system, and a program all of which are designed to prevent output of traffic information and the like not directed to the own vehicle.

### BRIEF DESCRIPTION OF THE DRAWINGS

FIG. 1 is a diagram of the general configuration of a road communication system according to an embodiment of the present invention;
FIG. 2 is a diagram schematically showing the relationship between a roadside apparatus and an utterance type vehicle-mounted device and an information provision server all of which are main hardware in the road communication system in FIG. 1, and communication processing based on DSRC;
FIG. 3 is a diagram showing the hardware configuration of the roadside apparatus installed on a road in the road communication system in FIG. 1;
FIG. 4 is a diagram showing the configuration of the vehicle-mounted device mounted in a vehicle in the road communication system in FIG. 1;
FIG. 5 is a diagram illustrating those of the functions of the utterance type vehicle-mounted device shown in FIG. 1 which relate to the present invention;
FIG. 6 is a diagram showing an example of the configuration of the information provision server shown in FIG. 1;
FIG. 7 is a diagram showing an example of the configuration of magnetic tapes provided on the road in the road communication system in FIG. 1;
FIG. 8 is a diagram showing a process executed by the utterance type vehicle-mounted device shown in FIG. 1, to record information on a direction in which the vehicle travels;
FIG. 9 is a flowchart of a first utterance acceptability decision process executed by the utterance type vehicle-mounted device shown in FIG. 1;
FIG. 10 is a flowchart of a second utterance acceptability process executed by the utterance type vehicle-mounted device shown in FIG. 1;
FIG. 11 is a flowchart of the second utterance acceptability process executed by the utterance type vehicle-mounted device shown in FIG. 1;
FIG. 12 is a flowchart of a third utterance acceptability decision process executed by the utterance type vehicle-mounted device shown in FIG. 1;
FIG. 13 is a sectional view of the vehicle showing an example of the configuration of a magnetic marker sensor provided at the bottom of the vehicle and a magnetic marker provided on the road;
FIG. 14 is a flowchart of a process executed by the utterance type vehicle-mounted device shown in FIG. 1, to detect direction information;
FIG. 15 is a flowchart of a control process for direction information used, by the utterance type vehicle-mounted device shown in FIG. 1, for an utterance decision process after an utterance is provided;
FIG. 16 is a flowchart of control process for direction information used for a fourth utterance acceptability decision process executed by the utterance type vehicle-mounted device shown in FIG. 1;
FIG. 17 is a flowchart of a fourth utterance acceptability decision process executed by the utterance type vehicle-mounted device shown in FIG. 1; and
FIG. 18 is a diagram showing another example of the configuration of the direction identification unit shown in FIG. 5, wherein FIG. 5(A) is a diagram showing an example of the configuration in which the direction identification means have different colors and different shapes, and FIG. 5(B) is a diagram showing an example of the configuration in which the direction identification means are provided at different positions and different intervals.

### DESCRIPTION OF REFERENCES

100 Roadside apparatus, 200 utterance type vehicle-mounted device (vehicle-mounted device), 211 Communication processing unit, 217 Control unit, 252 Utterance acceptability decision unit (output acceptability decision unit), 253 Audio reproduction unit (information reproduction unit), 255, 255a Direction information detection unit, 256 Direction information storage unit, 257, 257A, 257B, 257a to 257e Magnetic tapes, magnetic markers (direction identification means), 300 Information provision server

### BEST MODES FOR CARRYING OUT THE INVENTION

An embodiment of the present invention will be described taking a road communication system as an example. The embodiment of the present invention will be described taking, as an example, a vehicle-mounted device mounted in a vehicle, particularly an utterance type vehicle-mounted device configured to reproduce audio information. However, the present invention can also be utilized in a vehicle-mounted device assumed to be appropriately connected to a navigation apparatus. The present invention can also be utilized if the navigation apparatus is of a portable, simplified type including no acceleration sensor or vehicle speed pulse.

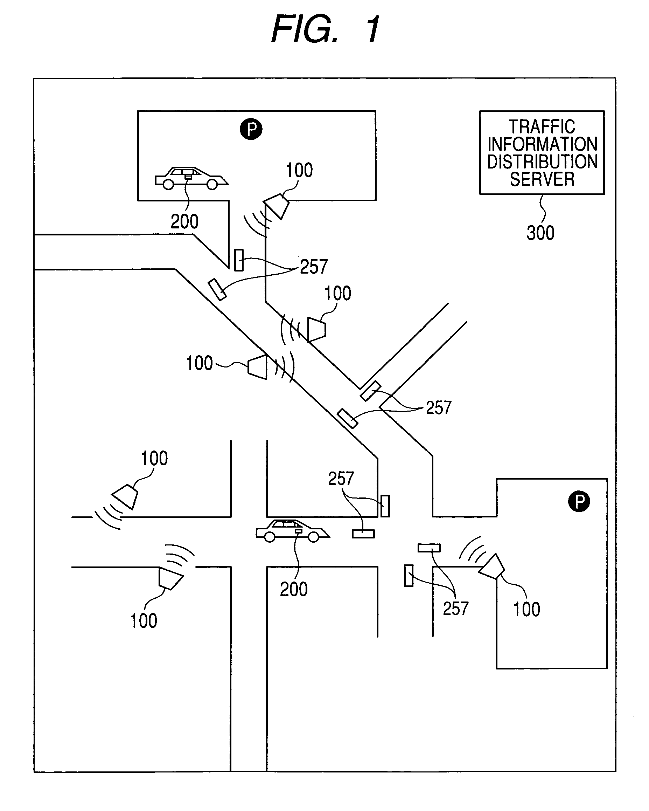

FIG. 1 is a diagram of the general configuration of a road communication system according to the embodiment of the present invention. As shown in FIG. 1, the road communication system includes roadside apparatuses 100 installed near sites such as roads and parking lots on or in which vehicles travel, utterance type vehicle-mounted devices 200 mounted in the vehicles to communicate with the roadside apparatuses 100 in a short range based on DSRC to provide audio information such as disaster information, traffic information, and safe driving support information which is to be transmitted to drivers or the like, direction identification means 257 provided on the roads, and an information provision server 300 configured to supply the information to the roadside apparatuses 100. The direction identification means 257 will be described later.

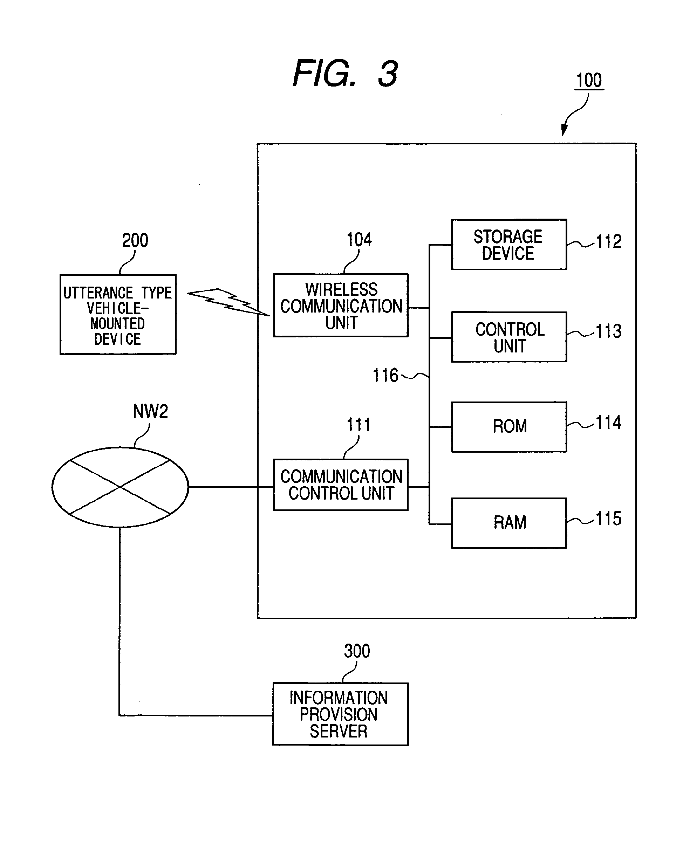

The roadside apparatus 100 shown in FIG. 1 utilizes what is called an electric wave beacon or an optical beacon to perform DSRC-based short range communicate with the utterance type vehicle-mounted device 200 in a directional, particular communication area; the vehicle-mounted device 200 mounted in a vehicle traveling on an expressway or the like. Each roadside apparatus 100 receives audio information and reproduction control information to be transmitted, from the information provision server 300 to store the information. The information provision server 300 and each roadside apparatus 100 are connected together via an ITS communication network NW2 described later (see FIG. 3).

### (Description of the general configuration of the road communication system)

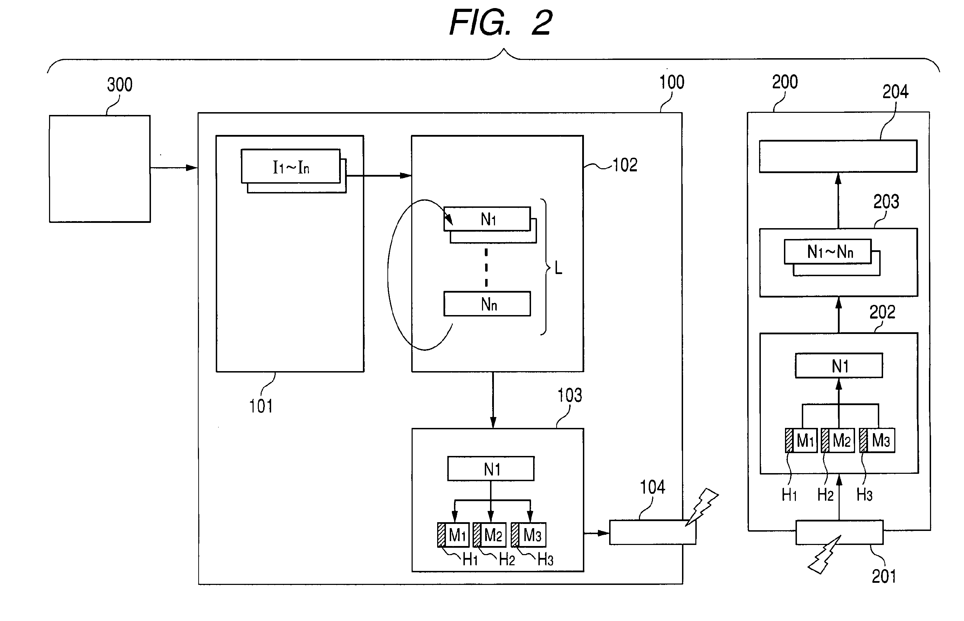

FIG. 2 is a diagram schematically showing the relationship between the roadside apparatus 100 and the utterance type vehicle-mounted device 200 and the information provision server 300 all of which are main hardware in the road communication system, and communication processing based on DSRC. The roadside apparatus 100 installed on a road repeatedly broadcasts a plurality of pieces of audio information provided by the information provision server 300, to the utterance type vehicle-mounted device 200 mounted in the vehicle passing through the communication area.

The roadside apparatus 100 includes an information update unit 101, a cyclic unit 102, a divided transmission unit 103, and a communication processing unit 104 in order to sequentially broadcast the audio information to the utterance type vehicle-mounted device 200.

The information update unit 101 is a function to add the plurality of pieces of audio information provided by the information provision server 300 to an audio information list held by the roadside apparatus 100 and to update the audio information. For example, as shown in FIG. 2, upon receiving a plurality of pieces of content update information I₁ to In from the information provision server 300, the information update unit 101 compares the content update information I₁ to In with a currently provided audio information list L to check for audio information to be updated. If the audio information is absent and if the audio information list is to be updated to the content update information, the information update unit 101 executes a process of adding and updating the audio information.

The cyclic unit 102 is a function to select audio information to be transmitted, from the audio information list L held by the roadside apparatus 100 to notify the divided transmission unit 103 of the selected audio information. For example, it is assumed that the audio information list L held by the roadside apparatus 100 contains pieces of audio information N1 to Nₙ as shown in FIG. 2. The cyclic unit 102 selects the piece of audio information N1 from the audio information in the list as audio information to be transmitted and notifies the divided transmission unit 103 of the piece of audio information N1. In principle, the cyclic unit 102 sequentially processes the pieces of audio information N1 to Nₙ held in the audio information list L, starting with the leading piece of information.

The divided transmission unit 103 divides the audio information received from the cyclic unit 102 into predetermined units to create divided information. Then, the divided transmission unit 103 newly adds divided header information to header information in the divided information to create transmission information to be broadcast to within a particular communication area. For example, the divided transmission unit 103 divides the piece of audio information N1 selected by the cyclic unit 102 into pieces of divided information M₁ to M₃, and adds pieces of divided header information H₁ to H₃ to the respective pieces of header information in the corresponding pieces of divided information. Thereafter, the communication processing unit 104 sequentially converts the pieces of divided information with the respective pieces of divided header information added thereto into radio signals or optical signals. The communication processing unit 104 then transmits the signals.

Now, the operation of the utterance type vehicle-mounted device 200 which received the information transmitted by the roadside apparatus 100 will be described. As shown in FIG. 2, the utterance type vehicle-mounted device 200 includes a communication processing unit 201, a divided information reorganization unit 202, a reproduction control unit 203, and an audio information reproduction unit 204.

The communication processing unit 201 provides a function to receive the divided information transmitted by the roadside apparatus 100. The divided information reorganization unit 202 provides a function to sequentially reorganize the pieces of divided information M₁ to M₃ received by the communication processing unit 201 into the original information N1 based on the pieces of divided header information H₁ to H₃ added to the respective pieces of divided information M₁ to M₃. The reproduction control unit 203 provides a function to control the order in which the received pieces of audio information are outputted. The audio information reproduction unit 204 provides a function to reproduce the audio information under the control of the reproduction control unit 203.

### (Description of the hardware configuration of the roadside apparatus and the operation of each unit of the roadside apparatus)

Now, the hardware configuration of the roadside apparatus 100 and the operation of each unit of the roadside apparatus 100 will be described with reference to FIG. 3. FIG. 3 is a diagram showing the hardware configuration of the roadside apparatus 100 installed on the road in the road communication system in FIG. 1. The hardware of the roadside apparatus 100 includes, in addition to the above-described wireless communication unit 104, a communication control unit 111, a storage device 112, a control unit 113, a ROM (Read Only Memory) 114, a RAM (Random Access Memory) 115, and a system bus 116.

The wireless communication unit 104 provides an information update function, a cyclic function, and a divided transmission function. Furthermore, the wireless communication unit 104 uses these functions to communicate traffic information provided by the information provision server 300 with the utterance type vehicle-mounted device 200 installed in the passing vehicle, via radio signals such as electric wave signals or optical signals.

The communication control unit 111 receives information (not shown in the drawings) including audio information transmitted by the information provision server 300. The storage device 112 provides a function to store, for example, the traffic information received from the information provision server 300 and traffic information specific to the own vehicle. The control unit 113 includes a processor such as a CPU (Central Processing Unit) to control the roadside apparatus 100 as a whole. In particular, the control unit 113 provides a function to transmit the traffic information stored in the storage device 112 from the wireless communication unit 104 and to store information acquired via the wireless communication unit 104, in the storage device 112. Furthermore, the control unit 113 provides a function to transmit the traffic information acquired by the apparatus and stored in the storage device 112, to the information provision server 300 via the communication control unit 111 and the ITS communication network NW2 and to store the acquired information from the information provision server 300 via the communication control unit 111, in the storage device 112.

The ROM 114 provides a function to store an OS (Operating System) and various pieces of information required to control the operation of the roadside apparatus 100 as a whole. The RAM 115 functions as a work area (an area for arithmetic processing) for the control unit 113. The system bus 116 functions as a transmission path through which commands and information are transferred among the units.

### (Description of the hardware configuration of the utterance type vehicle-mounted device and the operation of each unit of the device)

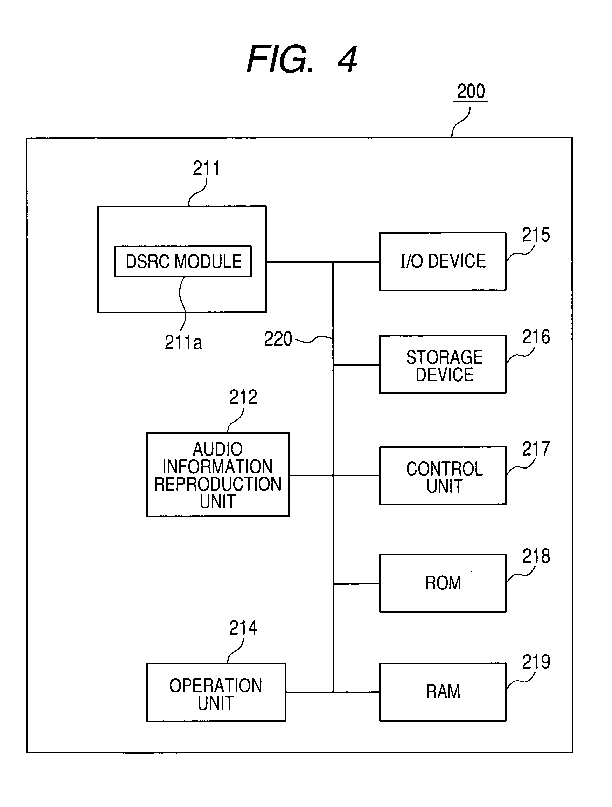

Now, the hardware configuration of the utterance type vehicle-mounted device 200 and the operation of each unit of the utterance type vehicle-mounted device 200 will be described mainly with reference to FIG. 4. FIG. 4 is a diagram showing the configuration of the utterance type vehicle-mounted device 200 mounted in each vehicle in the road communication system in FIG. 1. The utterance type vehicle-mounted device 200 is a simple utterance type vehicle-mounted device that does not use any means capable of detecting information on the position where the vehicle is traveling or any position on the roadside apparatus 100. Furthermore, the utterance type vehicle-mounted device 200 has no general car navigation functions. Additionally, the utterance type vehicle-mounted device 200 does not have a function to display various pieces of image information including traffic information transmitted by the roadside apparatus 100, but provides a function to simply notify the driver only of the audio information transmitted by the roadside apparatus 100.

As shown in FIG. 4, the utterance type vehicle-mounted device 200(vehicle-mounted device) includes a communication processing unit 211, an audio information reproduction unit 212, an operation unit 214, an I/O (Input/Output) device 215, a storage device 216, a control unit 217, a ROM 218, a RAM 219, and a system bus 220.

The communication processing unit 211 has the functions of the communication processing unit 201 and divided information reorganization unit 202 shown in FIG. 2. The communication processing unit 211 includes a DSRC module 211a.

The DSRC module 211a communicates with the roadside apparatus 100 via an antenna (not shown in the drawings) in accordance with the DSRC scheme. The DSRC module 211a executes the functions of the above-described divided information reorganization unit 202. Specifically, the DSRC module 211a reorganizes the transmitted divided information and processes the resulting information.

The audio information reproduction unit 212 converts a digital audio signal received from the control unit 217 into an analog audio signal via a D/A converter (not shown in the drawings). and outputs the analog audio signal to a speaker (not shown in the drawings).

The operation unit 214 includes a touch panel-type input device. The operation unit 214 generates an indication input signal based on an indication input from the user and inputs the signal to the control unit 217. The I/O device 215 reads out received audio information and inputs it to the control unit 217. The storage device 216 includes an HDD (Hard Disk Drive) and stores various pieces of setting information and the like. The storage device 216 may include any other memory such as a memory card.

The control unit 217 includes a CPU (Central Processing Unit) to control the operation of the utterance type vehicle-mounted device 200 as a whole. Specifically, the control unit 217 gives arithmetic commands and control commands to all of the communication processing unit 211, the audio information reproduction unit 212, the operation unit 214, the I/O device 215, the storage device 216, the ROM 218, the RAM 219, and the system bus 220 to control these components. For example, the control unit 217 receives traffic information from the roadside apparatus 100 via the DSRC module 211a. The control unit 217 then auditorially reproduces the traffic information based on reproduction timing control information (parameter) included in the received traffic information.

OS programs and various pieces of information required to control the operation of the utterance type vehicle-mounted device 200 as a whole are recorded in the ROM 218. The RAM 219 is configured to temporarily store information and programs and to hold audio information and the like acquired by the communication processing unit 211. Furthermore, the control unit 217 uses the RAM 219 as a work memory (an area for arithmetic processing). The system bus 220 is a transmission path configured to connect the above-described units together to allow commands and information to be transferred.

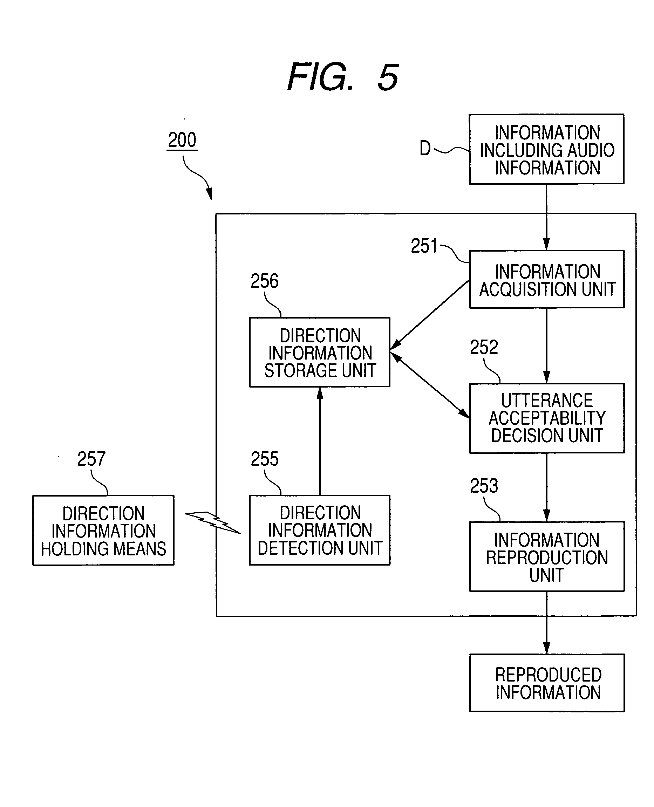

The utterance type vehicle-mounted device 200 can be divided as shown in FIG. 5 in terms of functions. FIG. 5 is a diagram illustrating those of the functions of the utterance type vehicle-mounted device 200 shown in FIG. 1 which relate to the present invention. The control unit 217 of the utterance type vehicle-mounted device 200 is configured to include an information acquisition unit 251, an utterance acceptability decision unit 252 (output acceptability decision unit), an information reproduction unit 253 (information output unit), a direction information detection unit 255, and a direction information storage unit 256. The information acquisition unit 251, the utterance acceptability decision unit 252, the information reproduction unit 253, the direction information detection unit 255, and the direction information storage unit 256 are not configured only by the control unit 217 but by the cooperation between the control unit 217 and the communication processing unit 211, audio information reproduction unit 212, the storage device 216, and the like.

The information acquisition unit 251 provides a function to acquire information D including one or more pieces of audio information to be reproduced, from the roadside apparatus 100. For example, the information D includes such information items as shown in Table 1 below. With reference to Table 1, the information items will be sequentially described starting with the top item in the table.

The traffic information type is information indicative of the type of traffic information. The traffic information type includes, for example, disaster information indicative of a natural disaster such as an earthquake, safe driving support information alerting the driver to a forward merging traffic, and general traffic information indicating a traffic jam or the like. The roadside apparatus ID is an ID that allows the roadside apparatus 100 to be uniquely discriminated from the other roadside apparatuses 100. The road type is information indicative of the type of the road. For example, the road type includes an expressway, a general road, a toll road, a general national road, and a main local road. The lane type is information used to distinguish the lanes of the road from each other. Table 1 shown below contains information indicative of an inbound lane and an outbound lane and an information item indicative of a belt line (inner loop and outer loop). However, not both pieces of information need to be provided. The orientation information is direction information (hereafter referred to as "direction information") indicative of the traveling direction of a vehicle traveling on the road. The direction information indicates, for example, four orientations, that is, north, south, east, and west, or eight or sixteen orientations. If the traffic information type is, for example, the disaster information, the direction information is not generally provided because the disaster information needs to be conveyed to all the drivers driving on the road. However, for the safety driving support information and the general traffic information, the direction information is generally provided because the safety driving support information and the general traffic information need to be conveyed to the drivers driving in a particular lane. The route number is a number allowing the road to be uniquely discriminated from the other roads. These pieces of information (hereafter referred to as "attribute information") are indicative of attributes determining the acceptability of output of text information, a still image, or audio information (hereafter these pieces of information are called "content information"), the precedences of the information, and the like. The content information includes the contents of the disaster information, the safe driving support information, the general traffic information, commercial multipurpose information, or the like. Audio information is provided, for example, in a TTS (Text-To-Speech) form. These pieces of content information may include one or more pieces of traffic information. Furthermore, whether or not the attribute information is added is determined depending on the content information.

**[Table 1]**

| |
|---|
| Traffic information type |
| Roadside apparatus ID |
| Road type |
| lane type (inbound and outbound) |
| lane type (belt line) |
| Orientation information |
| Route number |
| Text information |
| Still image information |
| Audio information |

The information acquisition unit 251 provides a function to reorganize and decode pieces of divided information D received from the communication processing unit 211 and including audio information or to read out and acquire the information stored in the storage device 216 at a predetermined timing.

The utterance acceptability decision unit 252 (output acceptability decision unit) provides a function to decide whether or not to output the audio information acquired by the information acquisition unit 251. The utterance acceptability decision unit 252 decides whether or not the utterance can be outputted by comparing the direction information included in the received information D with the direction information recorded in the direction information storage unit 256.

The information reproduction unit (information output unit) 253 (information output unit) provides a function corresponding to the audio information reproduction unit 204 shown in FIG. 2 and the audio information reproduction unit 212 shown in FIG. 4, that is, the function to reproduce audio information. The information reproduction unit 253 provides a function to reproduce audio information based on the decision result from the utterance acceptability decision unit 252. Furthermore, the information reproduction unit 253 may stop reproduction of audio information in response to an interruption process executed by the direction information detection unit 255 described below. Additionally, if a plurality of pieces of audio information need to be reproduced, the information reproduction unit 253 may control the order of reproduction according to the precedence of the respective pieces of audio information. For example, if three types of audio information, the disaster information, the safe driving support information, and the general traffic information, need to be reproduced, the precedence may be preset in order of the disaster information, the safe driving support information, and the general traffic information. Then, the reproduction order can be controlled based on this setting.

The direction information detection unit 255 provides a function to detect information on the traveling direction of the own vehicle via direction identification means 257 and a function to transmit the detected direction information to the direction information storage unit 256.

The direction information storage unit 256 provides a function to record the direction information on the vehicle with the utterance type vehicle-mounted device 200 mounted therein. The direction information storage unit 256 also provides a function to record the direction information transmitted by the direction information detection unit 255.

### (Description of the hardware configuration of the information provision server and the operation of each unit of the information provision server)

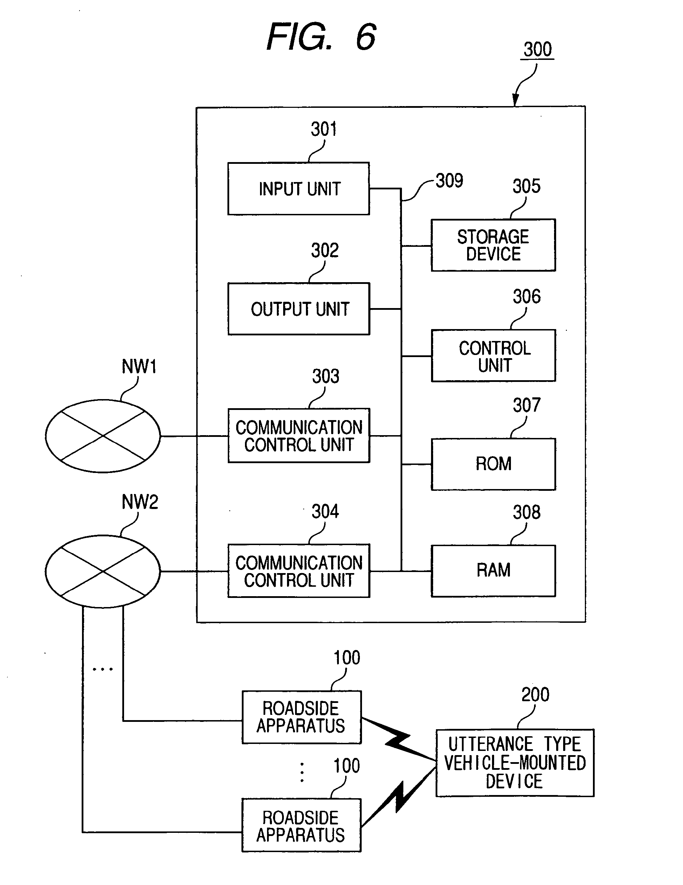

Now, the hardware configuration of the information provision server 300 and the operation of each unit of the information provision server 300 will be described with reference to FIG. 6. FIG. 6 is a diagram showing an example of the configuration of the information provision server 300 shown in FIG. 1. The information provision server 300 is an apparatus configured to generate and distribute traffic information and the like for each roadside apparatus 100. The information provision server 300 includes an input unit 301, a display unit 302, communication control units 303 and 304, a storage device 305, a control unit 306, a ROM 307, a RAM 308, and a system bus 309.

The input unit 301 includes one or more of a keyboard, a mouse, an input interface, and the like to input various pieces of information and instructions. The display unit 302 includes a display device or the like to display information, messages and the like.

The first communication control unit 303 communicates with external apparatuses via a general communication network NW1 such as a telephone line or the Internet to acquire various pieces of information. The second communication control unit 304 is connected to a plurality of roadside apparatus 100 via an ITS communication network NW2 to transmit traffic information to each of the roadside apparatuses 100. The second communication control unit 304 collects information obtained by the roadside apparatus 100 through communication with the utterance type vehicle-mounted device 200 (via the ITS communication network NW2).

The storage device 305 includes a hard disk device to store various pieces of traffic information. The storage device 305 is also configured to store the position, address, and the like of each roadside apparatus 100 and geographical information on the vicinity of the roadside apparatus 100.

The control unit 306 includes a processor to control the operation of the information provision server 300 as a whole. Furthermore, based on the various pieces of information stored in the storage device 305, the control unit 306 creates information to be distributed to each roadside apparatus 100 from the vicinity of the roadside apparatus 100. The control unit 306 then supplies the information to the roadside apparatus 100 via the second communication control unit 304 and the ITS communication network NW2.

The ROM 307 is configured to store an OS (Operating System) and various pieces of information required to control the operation of the information provision server 300 as a whole. The RAM 308 functions as a work area for the control unit 306. The system bus 309 is a transmission path through which commands and information are transferred among the units.

### (Description of a first utterance acceptability decision process executed by the utterance type vehicle-mounted device)

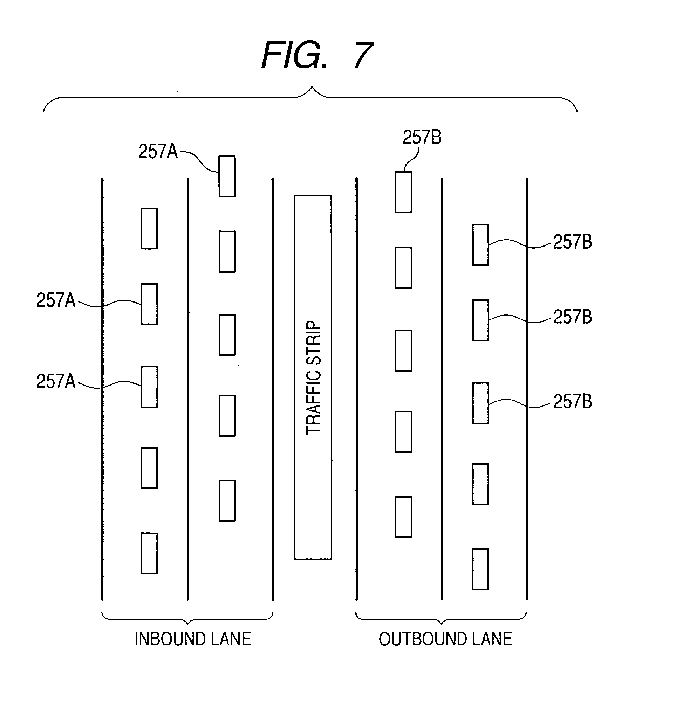

A first utterance acceptability decision process executed by the utterance type vehicle-mounted device 200 according to the embodiment of the present invention will be specifically described. FIG. 7 is a diagram showing an example of the configuration of magnetic tapes 257A and 257B provided on the road in the road communication system in FIG. 1. The magnetic tapes 257A and 257B are linearly set in the center of each traveling lane for vehicles at appropriate intervals. Thus, when the vehicle travels in the traveling lane, the magnetic tapes lie opposite the bottom of the vehicle directly or via the ground.

The magnetic tapes 257A and 257B are band-like magnetic recording media each formed by coating a powdery magnetic substance on a film together with an adhesive. Direction information is recorded on the magnetic tapes 257A and 257B based on a variation in magnetization. Direction information indicative of the "inbound", corresponding to road lane information, is recorded on the magnetic tape 257A. Direction information indicative of the "outbound", corresponding to road lane information, is recorded on the magnetic tape 257B. The direction information recorded in the magnetic tapes 257A and 257B is read by a magnetic sensor (not shown in the drawings) that is the direction information detection unit 255.

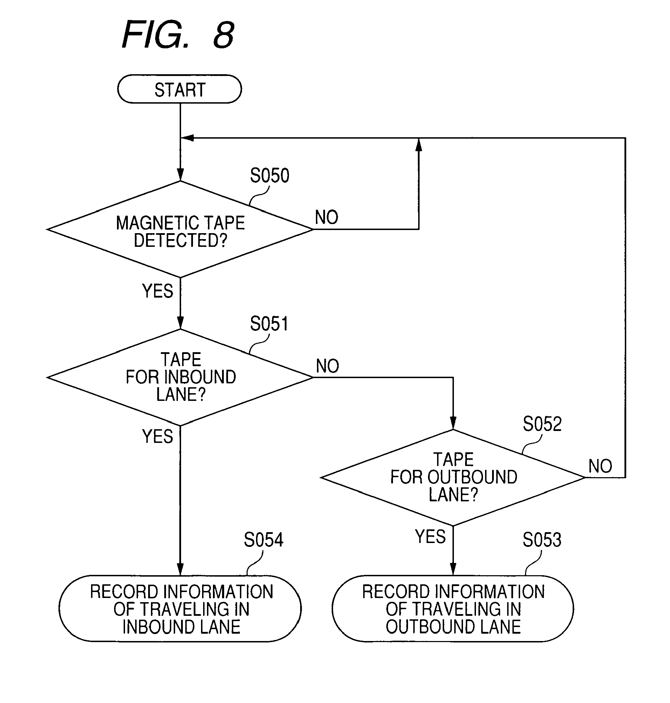

Specifically, the process of storing the direction information will be described. FIG. 8 is a diagram showing the process executed by the utterance type vehicle-mounted device 200 shown in FIG. 1 to record information on the traveling direction of the vehicle. As shown in FIG. 8, when powered on (START), the utterance type vehicle-mounted device 200 decides whether or not the magnetic tape 257A or 257B has been detected (step S050). If the magnetic tape 257A or 257B cannot be detected (No), the utterance type vehicle-mounted device 200 repeats the decision in step S050 until the utterance type vehicle-mounted device 200 can detect the magnetic tape 257A or 257B. If the magnetic tape 257A or 257B is detected (Yes), the utterance type vehicle-mounted device 200 reads magnetic information from the magnetic tape 257A or 257B to decide whether or not the magnetic tape is for the inbound lane (step S051). Whether or not the magnetic tape is for the inbound lane is decided by reading the direction information recorded in the magnetic tape 257A or 258B. Upon deciding that the magnetic tape is for the inbound lane as a result of reading of the magnetic tape 257A (Yes), the utterance type vehicle-mounted device 200 records data indicating that the vehicle is traveling in the "inbound lane", in the direction information storage unit 256 (step S054). Upon deciding that the magnetic tape is not for the inbound lane (No), the utterance type vehicle-mounted device 200 further decides whether or not the magnetic tape is for the outbound lane (step S052). Upon deciding that the magnetic tape is not for the outbound lane (No), the utterance type vehicle-mounted device 200 returns to the decision process in step S050. Upon deciding that the magnetic tape is for the outbound lane as a result of reading of the magnetic tape 257B (Yes), the utterance type vehicle-mounted device 200 records data indicating that the vehicle is traveling in the "outbound lane", in the direction information storage unit 256 (step S053).

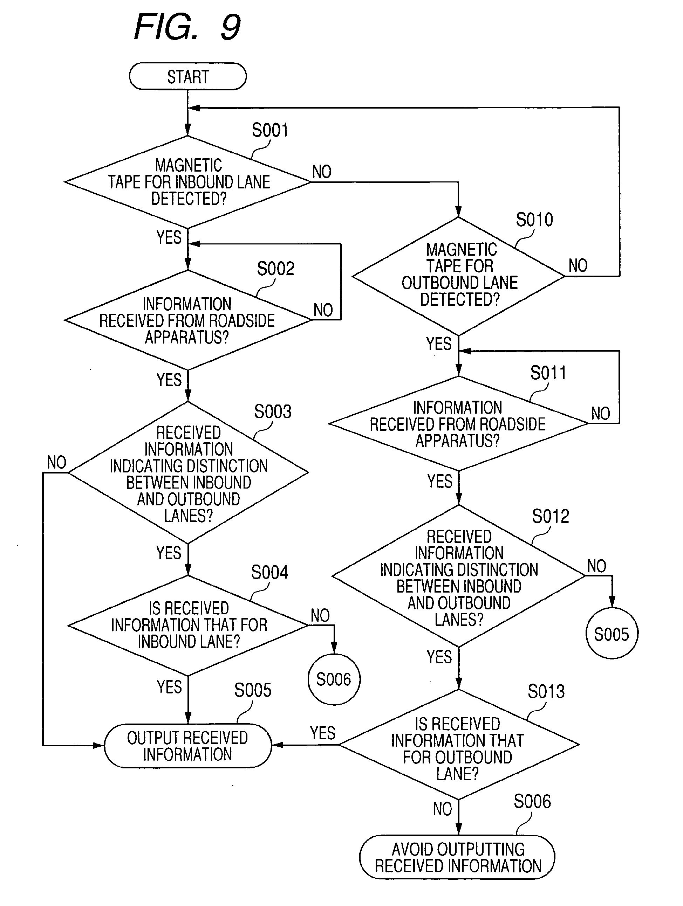

Based on the thus detected direction information indicative of the vehicle traveling direction, the utterance type vehicle-mounted device 200 executes the first utterance acceptability decision process described below. FIG. 9 is a flowchart of the first utterance acceptability decision process executed by the utterance type vehicle-mounted device 200 shown in FIG. 1. In the flowchart of the first utterance acceptability decision process, some or all of steps S050 to step S054 shown in FIG. 8 are executed at the same time.

When power on (START), the utterance type vehicle-mounted device 200 decides whether or not the magnetic tape 257A for the inbound lane has been detected (step S001). If the magnetic tape 257A for the inbound lane has been detected (Yes), the utterance type vehicle-mounted device 200 executes the processing in steps S050, S051, and S054 and then decides whether or not information has been received from the roadside apparatus 100 (step S002). If no information has been received from the roadside apparatus 100 (No), the utterance type vehicle-mounted device 200 repeats the decision process in step S002 until information is received from the roadside apparatus 100. The utterance type vehicle-mounted device 200 decides whether or not the information received from the roadside apparatus 100 includes direction information indicative of the distinction between the inbound and outbound lanes (step S003). If the information received from the roadside apparatus 100 includes direction information indicative of the distinction between the inbound and outbound lanes (Yes), the utterance type vehicle-mounted device 200 further decides whether or not the received information is for the inbound lane (step S004). If the received information is for the inbound lane (Yes), the utterance type vehicle-mounted device 200 outputs the received information as voice (step S005). If the received information is not for the inbound lane (No), the utterance type vehicle-mounted device 200 avoids outputting the received information (step S006). If the magnetic tape 257A for the inbound lane has not been detected (No in step S001), the utterance type vehicle-mounted device 200 shifts to a decision of whether or not the magnetic tape 257B for the outbound lane has been detected (step S010). The utterance type vehicle-mounted device 200 then executes step S011 to step S013 as is the case with steps S002 to S005. Detailed description of these steps is omitted.

The first utterance acceptability decision process as described above allows decision of whether or not the audio information is for the own vehicle. Furthermore, with this configuration, if the utterance type vehicle-mounted device 200 receives audio information provided for a direction different from the vehicle traveling direction, from the roadside apparatus 100, the utterance type vehicle-mounted device 200 is prevented from outputting the error traffic information or the like without the use of the position information on the vehicle or the roadside apparatus 100. This reduces the risk that the driving of the vehicle is affected as a result of the driver hearing the error traffic information or the like. If information failing to coincide with the direction information is consecutively received in a short time in step S004 or step S013 described above, a process of uttering a message alerting the driver, for example, "You may be travelling in the wrong lane", may be additionally executed. Then, traveling in the wrong lane can be detected to enable the driver to be warned of this.

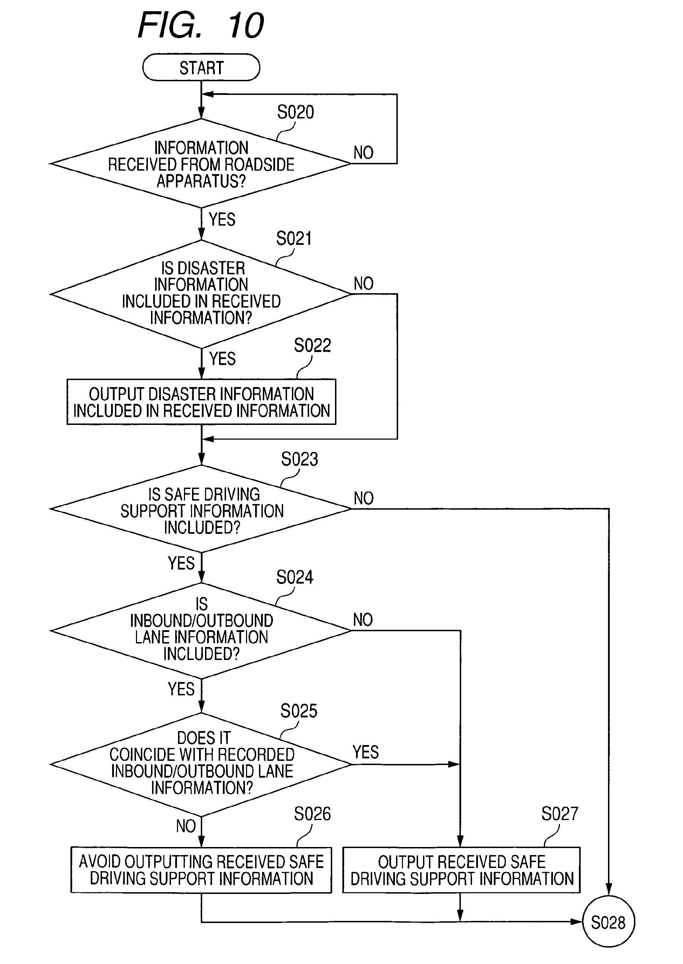

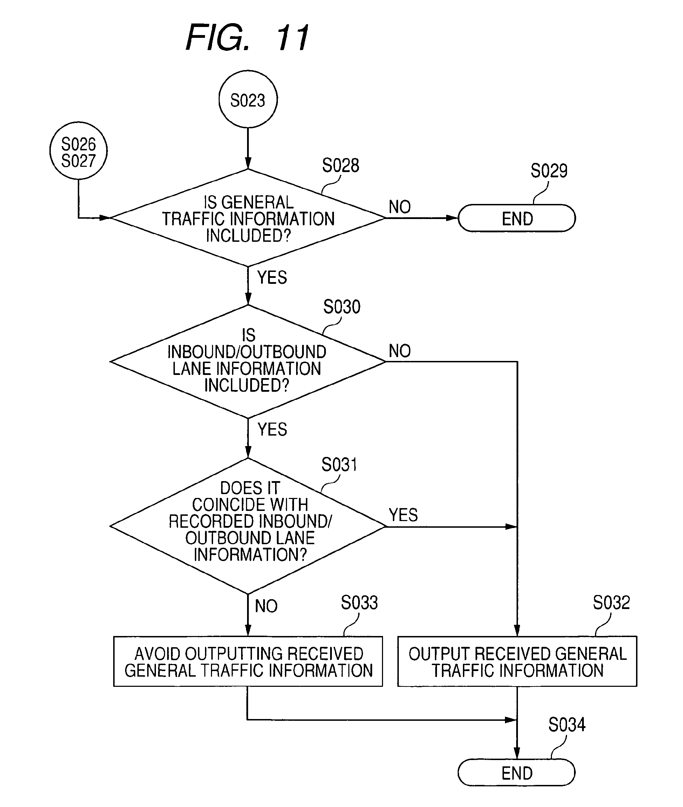

Now, a second utterance acceptability decision process executed if a plurality of types of information have been received from the roadside apparatus 100 will be described. FIG. 10 and FIG. 11 are flowcharts of the second utterance acceptability decision process executed by the utterance type vehicle-mounted device 200 shown in FIG. 1.

In the road communication system according to the embodiment of the present invention, a plurality of types of information (information on a disaster such as an earthquake, safe driving support information on a sudden accident or an alert to a junction, and such general traffic information as obtained from a highway radio) may be simultaneously transmitted by one roadside apparatus 100. The disaster information needs to be conveyed to all the drivers driving on the road. Hence, the distinction between the inbound and outbound lanes or the like is not set for the disaster information, which thus includes no direction information. However, the distinction corresponding to the direction in which the vehicle is traveling needs to be set for the safe driving support information and the general traffic information. Thus, the safe driving support information and the general traffic information may include direction information indicative of the inbound or outbound lane. Thus, it is appropriate that when a plurality of types of such information have been received, utterance precedence control complies with the disaster information, the safety driving support information, and the general traffic information. The second utterance acceptability decision process will be described below with reference to FIG. 10 and FIG. 11.

When powered on (START), the utterance type vehicle-mounted device 200 decides whether or not information has been received from the roadside apparatus 100 (step S020). If no information has been received from the roadside apparatus 100 (No), the utterance type vehicle-mounted device 200 repeats the decision process in step S020. If information has been received from the roadside apparatus 100 (Yes), the utterance type vehicle-mounted device 200 decides whether or not the received information includes disaster information (step S201). If the received information includes disaster information (Yes), the utterance type vehicle-mounted device 200 outputs the disaster information included in the received information, as voice (step S022). If the received information includes no disaster information (No) and after the utterance process in step S022, the utterance type vehicle-mounted device 200 executes a process of deciding whether or not the received information includes safe driving support information (step S023). If the received information includes safe driving support information (Yes), the utterance type vehicle-mounted device 200 further decides whether or not the received information includes the inbound/outbound lane information (step S024). If the received information includes inbound/outbound lane information (Yes), the utterance type vehicle-mounted device 200 decides whether or not the inbound/outbound lane information coincides with the inbound/outbound lane recorded in the direction information storage unit 256 (step S025). If the inbound/outbound lane information fails to coincide with the inbound/outbound lane recorded in the direction information storage unit 256 (No), the utterance type vehicle-mounted device 200 avoids outputting the safe driving support information as voice (step S026). If the inbound/outbound lane information coincides with the inbound/outbound lane recorded in the direction information storage unit 256 (Yes), the utterance type vehicle-mounted device 200 outputs the safe driving support information as voice (step S027). If the received information includes no safe driving support information (No in S203) or if the processing in step S26 or step S027 is finished, the utterance type vehicle-mounted device 200 decides whether or not the received information includes general traffic information (step S028). Then, if the received information includes general traffic information (Yes), the utterance type vehicle-mounted device 200 executes the processing in steps S030 to S033 shown in FIG. 11 as is the case with the above-described control process in steps S024 to S027. If the received information includes no general traffic information (No) and if the processing in step S032 or step S033 is finished, the utterance type vehicle-mounted device 200 terminates the utterance acceptability decision process (with No in step S028, the process is terminated in step S029, and if the processing in step S032 or step S033 is completed, the process is terminated in step S034).

Even if a plurality of types of audio information are received, the second utterance acceptability decision process as described above enables these pieces of audio information to be sequentially output in order of decreasing precedence for the driver while deciding whether or not the audio information is directed to the own vehicle. Thus, the utterance type vehicle-mounted device 200 is preferable in terms of safe driving.

### (Description of a third utterance acceptability decision process executed by the utterance type vehicle-mounted device)

Now, a third utterance acceptability decision process executed by the utterance type vehicle-mounted device 200 according to the embodiment of the present invention will be specifically described. The first utterance acceptability decision process is assumed to involve two pieces of road direction information indicative of the inbound and outbound lanes, respectively, as in the case of an expressway. However, in the third utterance acceptability decision process described below, it is assumed that the received information includes a plurality of pieces of direction information. Furthermore, the direction information detection unit 255 and direction identification means 257 according to the above-described embodiment of the present invention use the magnetic sensor and the magnetic tapes. However, the present embodiment uses a magnetic marker sensor and magnetic markers. Of course, in the third utterance acceptability decision process, the direction identification means 257 may be magnetic tapes.

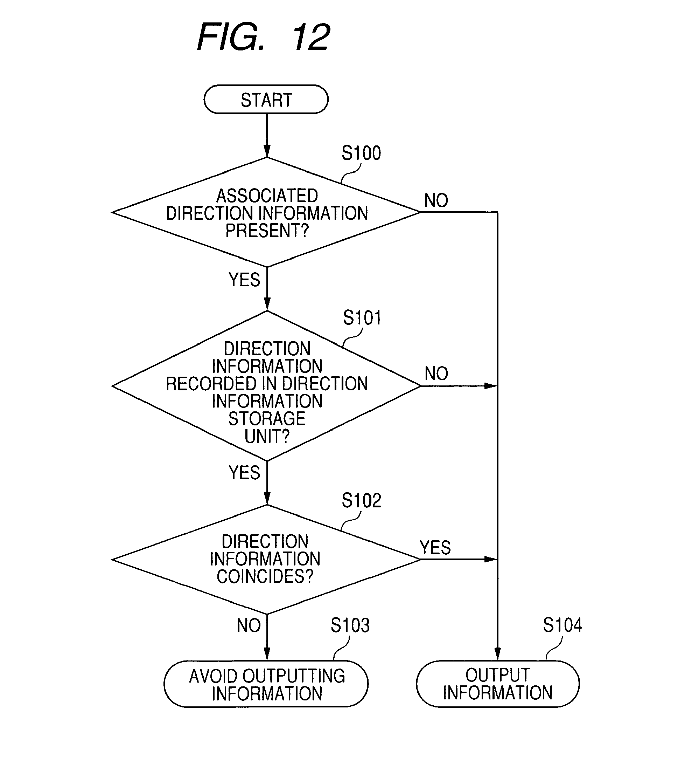

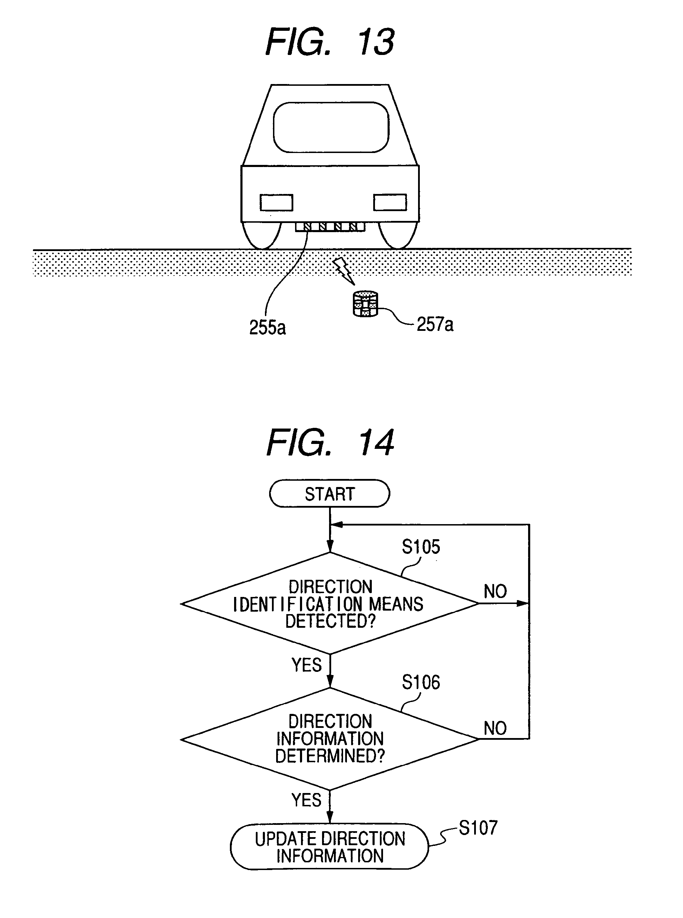

FIG. 12 is a flowchart of the third utterance acceptability decision process executed by the utterance type vehicle-mounted device 200 shown in FIG. 1. FIG. 13 is a sectional view of a vehicle showing a magnetic marker sensor 255a provided at the bottom of the vehicle and magnetic markers 257a provided in the road.

The magnetic marker sensor 255a includes a permanent magnet containing NdFeB and is provided at the bottom of the vehicle. The magnetic markers 257a are provided in the road at predetermined intervals. Traveling direction information and direction information are recorded in the magnetic markers 257a; the traveling direction information is indicative of the inbound or outbound lane of the road, and the direction information includes 16 orientation information indicative of the direction in which the lane extends, that is, north, south, east, or west. The magnetic marker sensor 255a can detect and read the direction information indicative of the traveling direction of the own vehicle, from the magnetic marker 257a in a non-contact manner. The magnetic marker sensor 255a records the direction information detected as described above, in the direction information storage unit 256. The above-described predetermined interval may be, for example, in the case of an expressway, between 500 m and 1 km or between 2 km to 5 km. The magnetic marker 257a may be provided near an entry to or an exit from a PA (Parking Area) or an SA (Service Area). Furthermore, on a general road, the magnetic marker 257a may be provided near a fork such as an intersection or a T-junction where the traveling direction may be changed. Based on the thus detected direction information, the third utterance acceptability decision process may be executed.

The utterance type vehicle-mounted device 200 receives the information D including audio information from the roadside apparatus 100 (START). The utterance type vehicle-mounted device 200 decides whether or not the information D includes direction information associated with the audio information (step S100). If the information D includes direction information associated with the audio information (Yes), the utterance type vehicle-mounted device 200 decides whether or not direct information is recorded in the direction information storage unit 256 (step S101). If direct information is recorded in the direction information storage unit 256 (Yes), the utterance type vehicle-mounted device 200 decides whether or not the recorded direction information coincides with the direction information associated with the received audio information (step S102). If the direction information associated with the received audio information fails to coincide with the direction information recorded in the direction information storage unit 256 (No), the utterance type vehicle-mounted device 200 avoids outputting the audio information (step S103). If the information D includes no direction information associated with the audio information (No in step S100), if no direction information is recorded in the direction information storage unit 256 (No in step S101), and if the direction information recorded in the direction information storage unit 256 coincides with the direction information associated with the audio information (Yes in step S102), the utterance type vehicle-mounted device 200 outputs the audio information directly as voice (step S104). With no initial value for the direction information recorded in the direction information storage unit 256, the direction information associated with the first audio information output after the utterance type vehicle-mounted device 200 is powered on may be recorded in the direction information storage unit 256.

### (Description of a direction information detection process executed by the direction information detection unit)

Now, a process executed by the utterance type vehicle-mounted device 200 according to the embodiment of the present invention to detect direction information will be described. FIG. 14 is a flowchart of the process executed by the utterance type vehicle-mounted device 200 shown in FIG. 1 to detect direction information. In the direction information detection process, the direction identification means 257 are detected as required and the direction information on the own vehicle is recorded in the direction information storage unit 256 or updated. Thus, the validity of the direction information is maintained, based on which the utterance type vehicle-mounted device 200 determines whether or not the audio information is directed to the own vehicle.

When a power source (not shown in the drawings) for the utterance type vehicle-mounted device 200 is turned on, the utterance type vehicle-mounted device 200 is started (START). The utterance type vehicle-mounted device 200 decides whether or not the direction identification means 257 provided on the road have been detected (step S105). If the direction identification means 257 provided on the road fail to have been detected (No), the utterance type vehicle-mounted device 200 repeats step S105 until the direction identification means 257 is detected. If the direction identification means 257 provided on the road have been detected (Yes), the utterance type vehicle-mounted device 200 reads the magnetic information recorded in the detected direction identification means 257 to decide whether or not the direction information has been determined (step S106). If the direction information fails to be determined based on the direction identification means 257 provided on the road (No), the utterance type vehicle-mounted device 200 returns to step S105 to detect the direction identification means 257 and determine the direction again. If the direction information is successfully determined based on the direction identification means 257 provided on the road (Yes), the utterance type vehicle-mounted device 200 updates the direction information recorded in the direction information storage unit 256 (step S107).

The decision control process as described above can exert the following effect in addition to those of the above-described third utterance acceptability decision process. Even if the received information includes a plurality of pieces of direction information (for example, even if the direction information is set based on 16 orientations), the utterance type vehicle-mounted device 200 can decide whether or not the audio information is directed to the own vehicle simply by deciding whether or not the direction information recorded in the direction information storage unit 256 coincides with the direction information associated with the audio information.

### (Description of a control process for direction information)

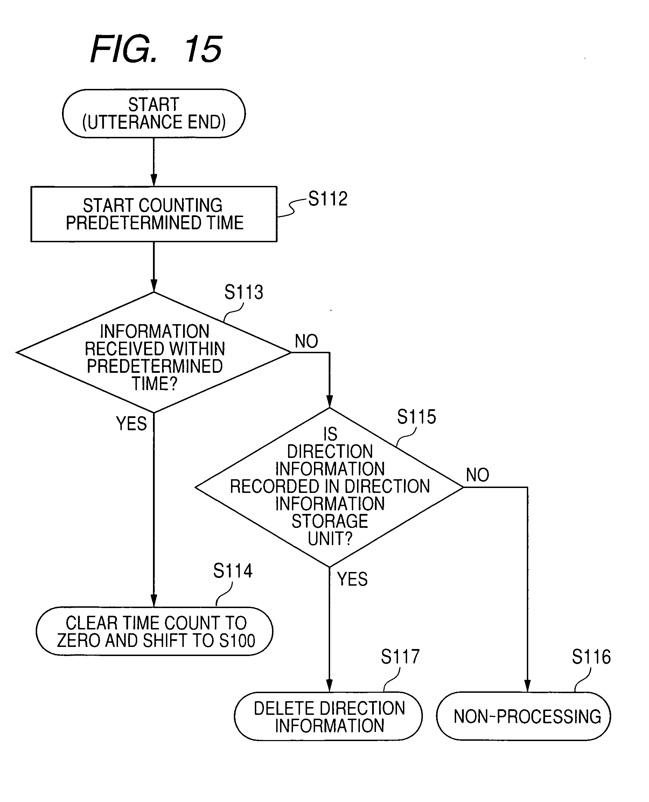

Now, a control process for direction information executed by the utterance type vehicle-mounted device 200 shown in FIG. 1 will be described with reference to FIG. 15. FIG. 15 is a flowchart of the control process for direction information used, by the utterance type vehicle-mounted device 200 shown in FIG. 1, for the utterance decision process after an utterance is provided. The control process is to avoid negative effects of recorded direction information remaining indicative of the traveling direction of the vehicle for a long time.

When the utterance process is completed (START), the utterance type vehicle-mounted device 200 counts a predetermined time (step S112). Then, the utterance type vehicle-mounted device 200 decides whether or not new information has been received within the predetermined time after the completion of the last utterance process (step S113). If new information has been received within the predetermined time (Yes), the utterance type vehicle-mounted device 200 then clears the time count to zero (step S114). If new information has been received (Yes), the utterance type vehicle-mounted device 200 simultaneously executes the decision process in step S100 shown in FIG. 12 (step S114).

If new information fails to have been received within the predetermined time (No), the utterance type vehicle-mounted device 200 decides whether or not direction information is recorded in the direction information storage unit 256 (sep S115). If no direction information is recorded in the direction information storage unit 256 (No), the utterance type vehicle-mounted device 200 executes no processing (step S116). If direction information is recorded in the direction information storage unit 256 (Yes), the utterance type vehicle-mounted device 200 deletes the direction information recorded in the direction information storage unit 256 (step S117). The predetermined time as used herein may be, for example, in the case of an expressway, between 4 minutes and 5 minutes or between 10 minutes and 20 minutes. Alternatively, the utterance type vehicle-mounted device 200 may be configured to allow the driver to set the predetermined time.

The control process for direction information as described above prevents the following problem in addition to exerting the effects of the above-described third utterance decision process: when the recorded direction information remains indicative of the traveling direction of the vehicle for a long time, if the vehicle starts to travel in a different direction, the vehicle is determined to travel in the wrong lane.

Now, a fourth utterance acceptability decision process according to the embodiment of the present invention will be described. In the fourth utterance acceptability decision process, the direction information detection unit 255 detects the direction identification means 257 with road inbound/outbound lane information and a route number pre-recorded therein, and records the information in the direction information storage unit 256. The utterance type vehicle-mounted device 200 then decides whether or not the audio information is directed to the own vehicle. Here, the route number includes information allowing the road to be uniquely discriminated (information allowing the road to be determined). The route number is, for example, "Highway 20" or "Metropolitan Expressway 10". If no road inbound/outbound lane information or route number is recorded in the direction information storage unit 256, the utterance type vehicle-mounted device 200 outputs the received information directly as voice.

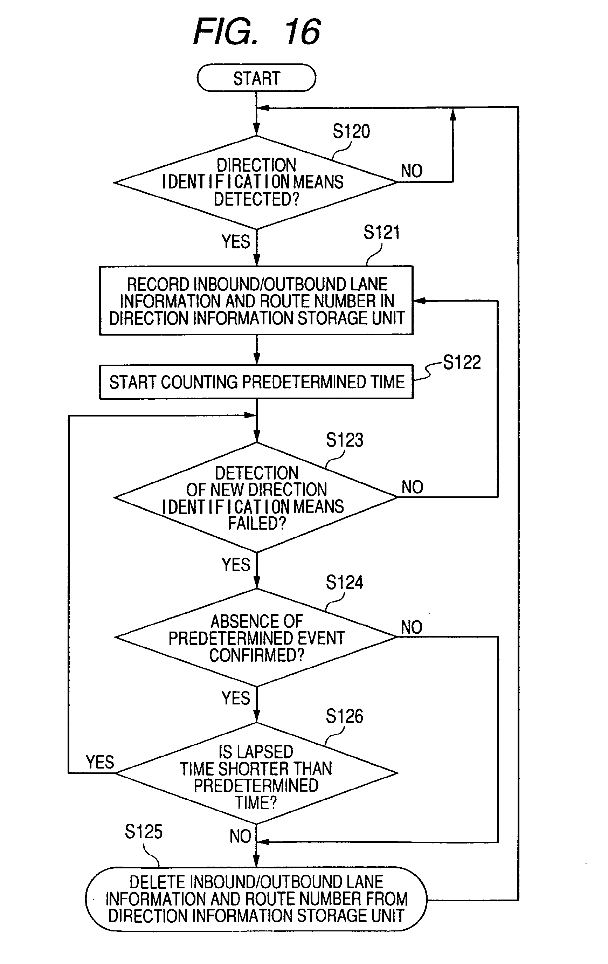

First, the control process for direction information used for the fourth utterance acceptability decision process according to the embodiment of the present invention will be described. This control process includes a process of detecting the direction identification means 257 with road inbound/outbound lane information and a route number prerecorded therein to acquire direction information on the own vehicle, and a process of holding the direction information on the own vehicle until a predetermined time lapses from the acquisition process of the direction information on the own vehicle or until a predetermined event occurs. Here, the predetermined time may be set, for example, in the case of an expressway, to 3 minutes with a traffic jam taken into consideration. However, any of various values may be set depending on a traffic status. Furthermore, the predetermined event refers to an event that is likely to change the vehicle traveling direction, for example, the case where a vehicle traveling distance acquired from various sensors in the vehicle exceeds 200 m, the case where a braking operation or a turn signal is detected in the own vehicle, or the case where a predetermined operation of the steering wheel is detected. The control process will be specifically described below with reference to FIG. 16. FIG. 16 is a flowchart of the control process for direction information used for the fourth utterance acceptability decision process executed by the utterance type vehicle-mounted device 200 shown in FIG. 1.

When the power source is turned on or a button configured to start the fourth utterance acceptability decision process is depressed (START), the utterance type vehicle-mounted device 200 decides whether or not the direction information detection unit 255 has detected the direction identification means 257 (step S120). If the direction information detection unit 255 fails to have detected the direction identification means 257 (No), the utterance type vehicle-mounted device 200 continues to execute the decision process in step S120 until the direction identification means 257 are detected. If the direction information detection unit 255 has detected the direction identification means 257 (Yes), the utterance type vehicle-mounted device 200 records the road inbound/outbound lane information and route number recorded in the detected direction identification means 257, in the direction information storage unit 256 (step S121). Then, the utterance type vehicle-mounted device 200 starts counting a predetermined time when step S121 is completed (step S122). The utterance type vehicle-mounted device 200 then decides whether or not new direction identification means 257 have been detected after the start of counting of the predetermined time in step S122 (step S123). If new direction identification means 257 have been detected after the start of counting of the predetermined time in step S122 (Yes), the utterance type vehicle-mounted device 200 shifts to the processing in step S121. If new direction identification means 257 fail to have been detected after the start of counting of the predetermined time in step S122 (No), the utterance type vehicle-mounted device 200 further decides whether or not the absence of the above-described predetermined event has been confirmed (step 124). If the absence of the above-described predetermined event has not been confirmed (No), the utterance type vehicle-mounted device 200 deletes the inbound/outbound lane information and route number recorded in the direction information storage unit 256 (step S125). The utterance type vehicle-mounted device 200 then shifts to step S120. If the absence of the above-described predetermined event has been confirmed (Yes), the utterance type vehicle-mounted device 200 decides whether or not the lapsed time is shorter than the above-described predetermined time (step S126). If the lapsed time is not shorter than above-described predetermined time (No), the utterance type vehicle-mounted device 200 deletes the inbound/outbound lane information and route number recorded in the direction information storage unit 256 (step S125). The utterance type vehicle-mounted device 200 then shifts to step S120. If the lapsed time is shorter than the above-described predetermined time (Yes), the utterance type vehicle-mounted device 200 shifts to the decision process in step S123 again. The decision processes in step S123, step S124, and step S126 have been described as a time-sequential process flow. However, the decision processes may be executed in parallel.

Furthermore, the above-described control process may be forcibly terminated and stopped when the utterance type vehicle-mounted device 200 is powered off or a button configured to stop the fourth utterance acceptability process is depressed. Alternatively, the inbound/outbound lane information and route number recorded in the direction information storage unit 256 may be deleted (cleared) when the utterance type vehicle-mounted device 200 is powered off or a button configured to stop the fourth utterance acceptability process is depressed. Alternatively, the inbound/outbound lane information and route number may be set to be held until the utterance type vehicle-mounted device 200 is started again next time or the button configured to start the fourth utterance acceptability decision process is depressed.

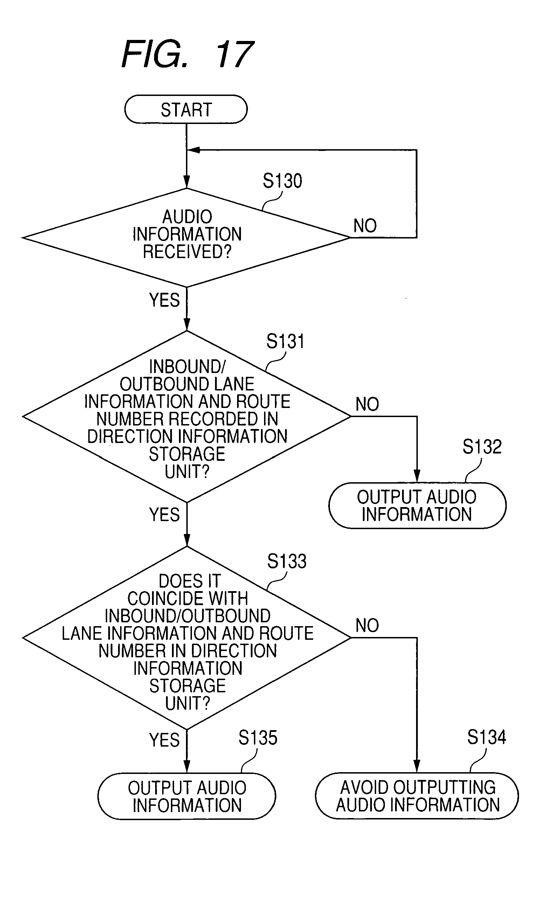

Now, a description will be given of the fourth utterance acceptability decision process according to the embodiment of the present invention, a process executed in parallel with the above-described control process for the direction information on the vehicle. FIG. 17 is a flowchart showing the fourth utterance acceptability decision process executed by the utterance type vehicle-mounted device 200 shown in FIG. 1.

When the power source is turned on or the button configured to start the fourth utterance acceptability decision process is depressed (START), the utterance type vehicle-mounted device 200 decides whether or not audio information has been received from the roadside apparatus 100 (step S130). If no audio information has been received from the roadside apparatus 100 (No), the utterance type vehicle-mounted device 200 repeats step S130 until audio information is received from the roadside apparatus 100. If audio information has been received from the roadside apparatus 100 (Yes), the utterance type vehicle-mounted device 200 decides whether or not the above-described inbound/outbound lane information and route number are recorded in the direction information storage unit 256 as direction information indicative of the traveling direction of the own vehicle (step S131). If the inbound/outbound lane information and route number are not recorded in the direction information storage unit 256 (No), the utterance type vehicle-mounted device 200 outputs the received audio information (step S132). If the inbound/outbound lane information and route number are recorded in the direction information storage unit 256 (Yes), the utterance type vehicle-mounted device 200 decides whether or not the recorded inbound/outbound lane information and route number coincide with the inbound/outbound lane information and route number added to the received audio information (step S133). If the inbound/outbound lane information and route number recorded in the direction information storage unit 256 does not coincide with the inbound/outbound lane information and route number added to the received audio information (No), the utterance type vehicle-mounted device 200 avoids outputting the audio information as voice (step S134). If the inbound/outbound lane information and route number recorded in the direction information storage unit 256 coincide with the inbound/outbound lane information and route number added to the received audio information (Yes), the utterance type vehicle-mounted device 200 outputs the audio information as voice (step S135).

When the control process as described above is executed in parallel with the utterance acceptability decision process, the following effect is exerted in addition to the effects of the above-described third utterance decision process: the utterance type vehicle-mounted device 200 can decide whether or not the received audio information can be outputted, with the information on the traveling direction of the own vehicle appropriately recorded or maintained in the direction information storage unit 256 at timing when the vehicle traveling direction is likely to be changed.

The embodiment of the present invention has been described. However, various changes may be made to the present invention without departing from the spirits of the present invention. For example, in the above-described road communication system, the magnetic tape and the magnetic marker are used as the direction identification means 257. However, the direction identification means 257 may be electric coils, recording media, white lines, LEDs, or the like.

Furthermore, in the above-described road communication system, direction information is detected by reading the direction information recorded in the magnetic tapes or magnetic markers serving as the direction identification means 257. However, the direction identification means 257 each with a two-dimensional code engraved therein may be provided in the road so that the direction information can be read from the two-dimensional code. Alternatively, if each of the direction identification means 257 includes no direction information, the following configuration is possible. For example, the existence or absence, shape, color, or luminance of the direction identification means 257, and the intervals (including a sequence) and positions at which the direction identification means 257 are provided on the road are preset for each traveling direction on the road in the form of pattern information. The pattern information is recorded in the storage device 216 in the utterance type vehicle-mounted device 200. Then, the difference in pattern information between the direction identification means 257 is read to detect the direction information (traveling direction) indicative of the traveling direction of the own vehicle. Alternatively, the above-describe pattern information allowing the direction identification means 257 to be discriminated from each other may be transmitted to the utterance type vehicle-mounted device 200 by the roadside apparatus 100, so as to be determined by the direction information detection unit 255 of the utterance type vehicle-mounted device 200. For example, if whether the lane is inbound or outbound is determined based on the existence or absence of the direction identification means 257 as in one of the above-described examples, the following configuration is possible. The roadside apparatus 100 pre-transmits, to the utterance type vehicle-mounted device 200, information indicating that the direction identification means 257 are provided only in the inbound lane, whereas nothing is provided in the outbound lane. Then, the utterance type vehicle-mounted device 200 decides that the vehicle is traveling in the inbound lane if the direction information detection unit 255 can detect the direction identification means 257. The utterance type vehicle-mounted device 200 decides that the vehicle is traveling in the outbound lane if the direction information detection unit 255 can detect nothing. However, in this case, preferably, the direction identification means 257 are provided on the road at predetermined intervals, and whether the vehicle is traveling in the inbound lane or in the outbound lane is decided depending on whether or not the direction identification means can be detected within a predetermined time.

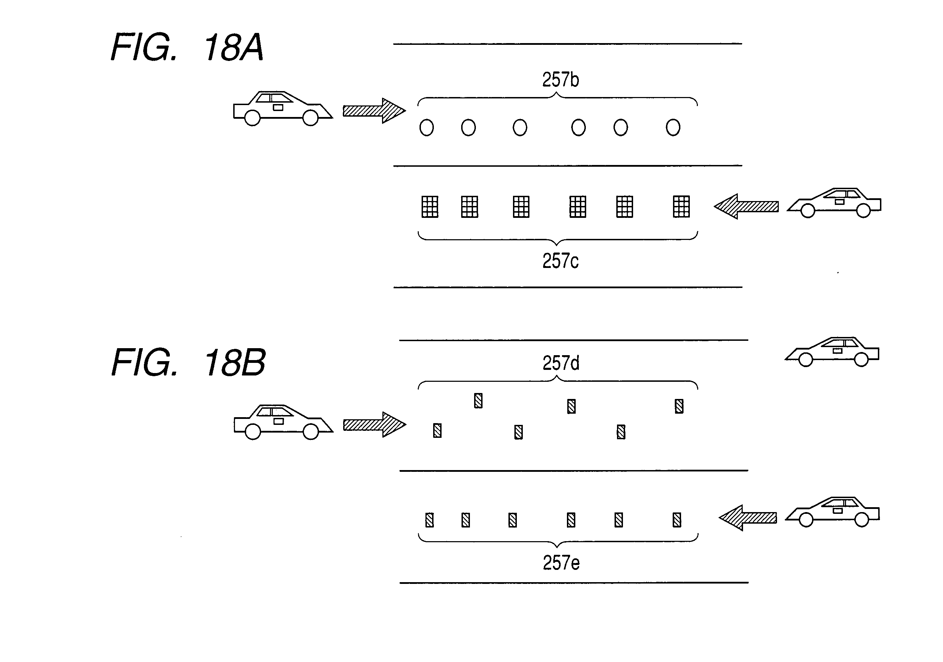

An example in which each of the direction identification means 257 includes no direction information (traveling direction) will be described with reference to FIG. 18. FIG. 18 is a diagram showing an example of the configuration of the direction identification means 257 shown in FIG. 5. FIG. 18(A) is a diagram showing an example of the configuration in which the direction identification means 257 have different colors and different shapes. FIG. 18(B) is a diagram showing an example of the configuration in which the direction identification means 257 are provided at different positions and at different intervals.

A road sensor used for an automated highway system (hereafter referred to as an "AHS") is used as the direction information detection unit 255. Specifically, a visible image road sensor, a millimeter-wave road sensor, or the like, which is a road sensor, is mounted in the vehicle.

Here, the visible image road sensor extracts objects from videos obtained with a CCTV (Closed Circuit Television system) in accordance with an image processing scheme such as a background differencing scheme or a frame differencing scheme. As shown in FIG. 18(A), direction identification means 257b and direction identification means 257c are provided on the respective roads with different traveling directions; each of the direction identification means 257b and each of the direction identification means 257c correspond to direction identification means 257 with different shapes and different colors. The shapes and colors of the direction identification means 257b and 257c detected in the respective roads are recorded in the direction information storage unit 256. The stored shapes and colors of the direction identification means 257b and 257c are compared with the shape and color of the direction identification means 257b or 257c extracted by the visible image road sensor (not shown in the drawings). Thus, the road direction information (traveling direction) can be detected. Alternatively, not only the road direction information but also the road type may be detected by pre-recording the road type in the above-described direction identification means 257b and 257c and allowing the direction information detection unit 255 to read the direction identification means 257b and 257c.

Furthermore, the millimeter-wave road sensor uses a millimeter wave in a 76-GHz band to irradiate an object with the millimeter wave in accordance with an FW-CW (Frequency Modulated Continuous Wave) scheme. The millimeter-wave road sensor thus detects the position of the object based on the time lag of a reflected wave. For example, as shown in FIG. 18(B), direction identification means are provided at positions and intervals (including a sequence) varying between the roads as in the case of the direction identification means 257d and 257e. The positions and intervals at which the direction identification means 257d and 257e are provided and which are detected in the respective roads are recorded in the direction information storage unit 256. The recorded positions and intervals at which the direction identification means 257d and 257e are compared with the intervals and sequence calculated from information on the positions and intervals at which the direction identification means 257d and 257e are provided and which are detected by the millimeter-wave road sensor (not shown in the drawings). Thus, the road direction information (traveling direction) can be detected. Alternatively, not only the road direction information but also the road type may be detected by pre-recording the road type in the above-described direction identification means 257d and 257e and allowing the direction information detection unit 255 to read the direction identification means 257d and 257e.

Alternatively, a plurality of types of the above-described direction identification means 257 may be combined together to allow the road direction information (traveling direction) to be obtained. If the road includes only the inbound lane and the outbound lane, the above-described direction identification means 257 may be provided exclusively in the inbound so that whether the lane is inbound or outbound can be decided by detecting the existence or absence of the direction identification means 257. Moreover, the following configuration is possible. The above-described direction identification means 257 are provided on the road so as to allow decision of not only the traveling direction on the road but also the lane corresponding to each of the direction identification means 257. The roadside apparatus 100 transmits pattern information allowing each lane to be discriminated from the other lanes, to the utterance type vehicle-mounted device 200 so that the utterance type vehicle-mounted device 200 can detect the lane type. The lane type as used herein includes not only the above-described information on the inbound and outbound lanes, inner loop and outer loop, but also road information such as a right lane and a left lane.

Furthermore, in the above-described fourth utterance acceptability decision process, the direction information and the route number are prerecorded in the direction identification means 257; the direction information is indicative of the traveling direction on the road, and the route number is a piece of information allowing the road type to be determined. However, information other than the route number which allows the road type to be determined (for example, a general road or a national road) may be prerecorded in the direction identification means 257, so as to be detected by the direction information detection unit 255 of the utterance type vehicle-mounted device 200.

Additionally, in the utterance acceptability decision process according to the embodiment of the present invention, the direction information is recorded in the above-described direction identification means 257, or the direction identification means 257 allow the vehicle traveling direction to be determined. The utterance type vehicle-mounted device 200 executes the corresponding utterance acceptability decision process. However, the following configuration is possible. Instead of the direction information, the information allowing the road to be determined as illustrated in the fourth utterance acceptability decision process is prerecorded, or is designed to allow the vehicle traveling direction to be determined. The utterance type vehicle-mounted device 200 compares this information with the information (for example, the road type or route number) allowing the road to be determined and included in the information received from the roadside apparatus 100. The utterance type vehicle-mounted device 200 thus executes an utterance acceptability decision process to decide whether or not to output voice.

Additionally, in the above description of the road communication system, it is assumed that the audio information included in the received information is divided so that the roadside apparatus 100 can transmit the resulting pieces of information. However, undivided information may be transmitted to the utterance type vehicle-mounted device 200. Furthermore, the above-described road communication system is preferably applied to an expressway but is applicable to all roads. Additionally, in the above description, the road communication uses a short range communication system called DSRC as a communication scheme, but is applicable to a wideband communication scheme. Furthermore, the utterance type vehicle-mounted device 200 illustrated in the above-described road communication system fails to provide a GPS function. However, the present invention is applicable to an ITS vehicle-mounted device with a navigation function or a GPS function. Additionally, the illustrated utterance type vehicle-mounted device 200 includes the information reproduction unit 253 (information output unit). However, the utterance type vehicle-mounted device 200 may be connected to a car audio instrument or the like to utilize an audio reproduction unit of the car audio instrument or the like to output audio information received from the roadside apparatus 100.

Furthermore, the above-described road communication system includes the information provision server 300. However, information stored in or transmitted to the roadside apparatus 100 may be received from a storage medium such as a CD or a DVD rather than from another server or may be transmitted through a broadcasting network.

Additionally, in the above-described road communication system, the utterance type vehicle-mounted device 200 mounted in the vehicle is an example of information reception means. However, a communication terminal such as a portable personal computer or a cellular phone may be mounted in the vehicle so as to be operable. Moreover, in the above-described embodiment, the functions of the roadside apparatus 100, the utterance type vehicle-mounted device 200, and the like are specified for the respective particular pieces of hardware, which thus serve as corresponding functional means. However, all or some of the functional means may be processed and executed by software including programs.

### INDUSTRIAL APPLICABILITY

The present invention is applicable to all road communication systems. The present invention can be utilized particularly for vehicle-mounted devices, output acceptability decision methods, road communication systems, and programs.

## Claims

1. A vehicle-mounted device mounted in a vehicle traveling on a road, the vehicle-mounted device comprising a communication processing unit configured to receive information from a roadside apparatus installed on the road, and an information output unit configured to output the information received by the communication processing unit, wherein the vehicle-mounted device further comprises a control unit configured to decide whether the received information is to be provided for the same direction as the vehicle traveling direction or for a direction different from the vehicle traveling direction depending on whether direction information detected by direction identification means provided on the road coincides with direction information included in the received information, to decide whether or not to output the received information.

2. The vehicle-mounted device according to claim 1, wherein the control unit comprises a direction information detection unit configured to be capable of detecting the direction information from the direction identification means provided on the road, a direction information storage unit configured such that the direction information is recorded therein, and an output probability decision unit configured to decide whether the received information is to be provided for the same direction as the vehicle traveling direction or for a direction different from the vehicle traveling direction depending on whether or not the direction information included in the received information coincides with the direction information recorded in the direction information storage unit, to decide whether or not to output the received information.

3. The vehicle-mounted device according to claim 1 or 2, wherein the direction identification means comprises data on direction information allowing the vehicle traveling direction to be determined, and the vehicle-mounted device reads the direction information from the direction identification means to detect the traveling direction on the road.

4. The vehicle-mounted device according to claim 1 or 2, the device operates to detect the traveling direction on the road based on the existence or absence, shape, or color of the direction identification means, or intervals or positions at which the direction identification means are provided on the road.

5. The vehicle-mounted device according to claim 1 or 2, wherein the direction identification means comprises information allowing the type of the road to be determined, and the vehicle-mounted device reads the information allowing the type of the road to be determined, from the direction identification means to detect the type of the road.

6. The vehicle-mounted device according to claim 1 or 2, wherein after detection of the direction identification means, when a failure to detect new direction identification means lasts for a predetermined time, the received information is outputted regardless of whether or not the received information includes direction information.

7. The vehicle-mounted device according to claim 2, wherein after detection of the direction identification means, when a failure to detect new direction identification means lasts for a predetermined time, the direction information detection unit deletes the direction information recorded in the direction information storage unit.

8. The vehicle-mounted device according to claim 1 or 2, wherein the vehicle-mounted device is prevented from acquiring position information on the vehicle from a GPS apparatus or a vehicle speed sensor.

9. An output acceptability decision method used for a vehicle-mounted device mounted in a vehicle traveling on a road and comprising a communication processing unit configured to receive information from a roadside apparatus installed on the road, and an information output unit configured to output the information received by the communication processing unit, the method comprising the steps of: detecting direction information from direction identification means provided on the road; deciding whether the received information is to be provided for the same direction as a vehicle traveling direction or for a direction different from the vehicle traveling direction depending on coincidence with the direction information included in the received information; and deciding whether or not to output the received information based on a result of the decision.

10. A road communication system comprising a vehicle-mounted device mounted in a vehicle, a roadside apparatus configured to transmit information including direction information to the vehicle-mounted device, an information provision server configured to transmit the information including the direction information to the roadside apparatus, and direction identification means provided on a road, wherein the vehicle-mounted device comprises: a communication processing unit configured to receive information from the roadside apparatus; an information output unit configured to output the information received by the communication processing unit; a direction information detection unit configured to be capable of detecting the direction information from the direction identification means; a direction information storage unit configured such that the direction information is recorded therein; and an output probability decision unit configured to decide whether the received information is to be provided for the same direction as a vehicle traveling direction or for a direction different from the vehicle traveling direction depending on whether or not the direction information included in the received information coincides with the direction information recorded in the direction information storage unit, to decide whether or not to output the received information.

11. A program for causing a computer to function as the vehicle-mounted device according to claim 1 or 2.
